# EUROPÄISCHE PATENTSCHRIFT

(11) **EP 1 893 951 B1**
(45) Veröffentlichungstag und Bekanntmachung des Hinweises auf die Patenterteilung: **29.06.2016**
(21) Anmeldenummer: 06763121.8
(22) Anmeldetag: 11.05.2006
(51) Int. Cl.: G01F 1/58, G01F 1/60, G01N 27/403

(54) **MAGNETISCH-INDUKTIVES DURCHFLUSSMESSGERÄT**
MAGNETICALLY INDUCTIVE FLOWMETER
APPAREIL DE MESURE DE DEBIT A INDUCTION MAGNETIQUE

(30) Priorität: 20.06.2005 DE 102005028723
(43) Veröffentlichungstag der Anmeldung: 05.03.2008
(73) Patentinhaber: Endress+Hauser Flowtec AG, 4153 Reinach (CH)
(72) Erfinder: BUDMIGER, Thomas, CH-4107 Ettingen (CH)
(74) Vertreter: Andres, Angelika Maria
(86) Internationale Anmeldenummer: PCT/EP2006/062240
(87) Internationale Veröffentlichungsnummer: WO 2006/136482

(56) Entgegenhaltungen:
- EP-A- 1 249 687
- US-A- 4 490 678

## Beschreibung

Die Erfindung betrifft ein magnetisch-induktives Durchflussmessgerät mit einem Messrohr, das von einem Medium im wesentlichen in Richtung der Messrohrachse durchflossen wird, mit einer Magnetanordnung, die ein das Messrohr durchsetzendes und im wesentlichen senkrecht zur Messrohrachse verlaufendes alternierendes Magnetfeld erzeugt, mit einer ersten Messelektrode und mit einer zweiten Messelektrode, wobei die Messelektroden im Messrohr auf einer Verbindungslinie positioniert sind, die im wesentlichen senkrecht zur Messrohrachse und zum Magnetfeld ausgerichtet ist, und mit einer Auswerte-/Regeleinheit, die anhand der an den Messelektroden abgegriffenen Messspannung den Volumen- bzw. den Massedurchfluss des Mediums durch das Messrohr bestimmt.

Magnetisch-induktive Durchflussmessgeräte nutzen für die volumetrische Strömungsmessung das Prinzip der elektrodynamischen Induktion aus: Senkrecht zu einem Magnetfeld bewegte Ladungsträger des Mediums induzieren in gleichfalls im Wesentlichen senkrecht zur Strömungsrichtung des Mediums angeordnete Messelektroden eine Spannung. Diese in die Messelektroden induzierte Messspannung ist proportional zu der über den Querschnitt des Messrohres gemittelten Strömungsgeschwindigkeit des Mediums; sie ist also proportional zum Volumenstrom. Bei bekannter Dichte des Mediums lässt sich darüber hinaus eine Aussage über den Massestrom des durch das Messrohr strömenden Mediums machen. Die Messelektroden sind üblicherweise mit dem Medium galvanisch oder kapazitiv gekoppelt.

Aus der US-PS 5,677,496 ebenso wie aus der EP 1 249 687 A1 ist bekannt geworden, dass an den Messelektroden neben der eigentlichen für die Durchflussmessung relevanten alternierenden Messspannung auch ein durch Störpotentiale an den Messelektroden gebildeter Gleichspannungsanteil auftritt. Um den Einfluss der Störpotentiale zu erfassen, wird an den beiden Messelektroden jeweils eine Spannung gegen ein Referenzpotential abgegriffen. Bei dem Referenzpotential handelt es sich üblicherweise um das Masse- bzw. Erdpotential. Anschließend wird ein Wert für den Gleichspannungsanteil der an den beiden Messelektroden gegen das Referenz-potential abgegriffenen Spannung ermittelt. In der US-PS 5,677,496 wird der Gleichspannungsanteil zur Korrektur der des eigentlichen Messspannungssignals genutzt. Hierdurch wird ein Spannungswert erhalten, der - nun nicht mehr fehlerbehaftet - ein direktes Maß für den Volumenstrom des Mediums durch das Messrohr ist.

In der EP 1 249 687 A1 ist darüber hinaus eine Ausgabeeinrichtung vorgesehen, mit der ein Wert für den Gleichspannungsanteil der an den beiden Messelektroden jeweils gegenüber dem Referenzpotential abgegriffenen Spannung dem Verwender zur Weiterverarbeitung zur Verfügung gestellt wird. Diese Lösung ist übrigens auch in dem seit dem Jahre 2000 von der Anmelderin angebotenen und vertriebenen Durchflussmessgerät PROMAG 50/53 realisiert. Darüber hinaus ist in der EP 1 249 687 A1 beschrieben, mit Hilfe des Gleichspannungsanteils der an den Messelektroden jeweils gegen das Referenzpotential abgegriffenen Spannung den pH-Wert des Mediums zu bestimmen.

Problematisch bei der in der EP 1 249 687 A1 vorgeschlagenen Lösung ist die für eine ausreichend hohe Messgenauigkeit notwendige Konstanz des Referenzpotentials. Wie in der EP 1 249 687 A1 beschrieben, wird die elektro-chemische Störspannung gegen das Referenzpotential, insbesondere gegen das Erdpotential gemessen. Hieraus ergibt sich zwangsläufig, dass die Güte der pH-Wertmessung mit der Konstanz des Referenzpotentials steht und fällt. Eine Eichung der magnetisch-induktiven Messgeräte erfolgt üblicherweise nicht vor Ort sondern vor der Auslieferung in der Produktionsstätte. Unterscheiden sich beispielsweise die während der Kalibrierung des Messgeräts verwendeten Anschluss-Rohrleitungen von den Anschluss-Rohrleitungen, die später im Betrieb des Durchflussmessgeräts am Messort verwendet werden, so ändert sich das Referenzpotential in einer nicht definierten Weise, da das Refer enzpotential nicht nur vom Material der Referenzelektrode sondern auch von dem Material der Rohrleitungen des Ein- und Auslaufs beeinflusst wird. Für die pH-Wertmessung bedeutet dies, dass der ausgegebene pH-Wert mit einem großen Messfehler behaftet ist, also eher einem Schätzwert als einem verlässlichen Messwert entspricht.

In der US 4 490 678 wird die Verwendung von Elektroden zur Messung von Ionenkonzentrationen offenbart, wobei de Elektroden unterschiedliche Empfindlichkeiten gegenüber Ionen aufweisen.

Der Erfindung liegt die Aufgabe zugrunde, ein magnetisch-induktives Durchflussmessgerät so auszugestalten, dass die elektrochemische Störspannung an den Messelektroden des Durchflussmessgeräts unabhängig ist vom Referenzpotential.

Die Aufgabe wird gemäß einer ersten Ausführungsform des erfindungsgemäßen magnetisch-induktiven Durchflussmessgeräts dadurch gelöst, dass die erste Messelektrode aus einem ersten Material A gefertigt ist, dass die zweite Messelektrode aus einem von dem ersten Material A unterschiedlichen zweiten Material C gefertigt ist, dass die Regel-/Auswerteeinheit den Gleichspannungsanteil der an den beiden Messelektroden jeweils gegenüber einem Referenzpotential abgegriffenen Spannung ermittelt und dass die Regel-/Auswerteeinheit anhand des Gleichspannungsanteils eine mediums-spezifische Information zur Verfügung stellt. Bevorzugt handelt es sich bei dem Referenzpotential um das Erdpotential.

Die Aufgabe wird gemäß einer zweiten Ausführungsform des erfindungsgemäßen magnetisch-induktiven Durchflussmessgeräts dadurch gelöst, dass die erste Messelektrode aus einem ersten Material A gefertigt ist, dass die zweite Messelektrode aus einem von dem ersten Material A unterschiedlichen zweiten Material C gefertigt ist, dass die Regel-/Auswerteeinheit die Gleichspannungsdifferenz zwischen den beiden Messelektroden ermittelt und dass die Regel-/Auswerteeinheit anhand der Gleichspannungsdifferenz eine mediumsspezifische Information zur Verfügung stellt. Um den Messfehler zu verringern, kann die Regel-/Auswerteeinheit den Gleichspannungsanteil bzw. die Gleichspannungsdifferenz gemäß einer vorteilhaften Weiterbildung des erfindungsgemäßen Durchflussmessgeräts über mehrere Messperioden mitteln.

Gemäß einer vorteilhaften Weiterbildung des erfindungsgemäßen magnetisch-induktiven Durchflussmessgeräts handelt es sich bei der mediumsspezifischen Information um eine physikalische Größe oder um eine elektrochemische Größe handelt. Im Falle der elektrochemischen Größe wird bevorzugt die Ionenkonzentration, ein elektrochemisches Potential oder der pH-Wert des Mediums bestimmt. Als physikalische Größe wird beispielsweise Information über die Impedanz oder die Leitfähigkeit des durch das Messrohr strömenden Mediums bereitgestellt.

Als besonders vorteilhaft wird es in Zusammenhang mit der vorliegenden Erfindung erachtet, wenn aufgrund von Historiendaten Information über Änderungen am Messgerät oder im Prozess zur Verfügung gestellt werden. Hierzu ist gemäß einer Ausgestaltung des erfmdungsgemäßen magnetisch-induktiven Durchflussmessgeräts eine Speichereinheit vorgesehen, in der die ermittelte mediumsspezifische Information oder die Information über den Gleichspannungsanteil in Abhängigkeit von der Zeit gespeichert ist; anhand einer zeitlichen Änderung der mediumsspezifischen Information wird eine Meldung bereitstellt, die mit einer entsprechend vorgegebenen Änderung am Durchflussmessgerät oder im Prozess korreliert ist. Insbesondere ist in der Speichereinheit mindestens ein Sollwert für die mediumsspezifische Information abgespeichert; über- oder unterschreitet der gemessene oder ermittelte Istwert den Sollwert oder eine um den Sollwert vorgegebene Toleranz, so wird eine entsprechende Meldung ausgegeben, abgespeichert oder an eine übergeordnete Leitwarte weitergeleitet.

Die Erfindung wird anhand der nachfolgenden Figuren näher erläutert. Es zeigt:
Fig. 1: eine schematische Darstellung des erfindungsgemäßen magnetisch-induktiven Durchflussmessgeräts
   a) ohne Referenzelektrode und
   b) mit Referenzelektrode;
Fig. 2: eine schematische Darstellung der an den Messelektroden abgegriffenen Spannung.

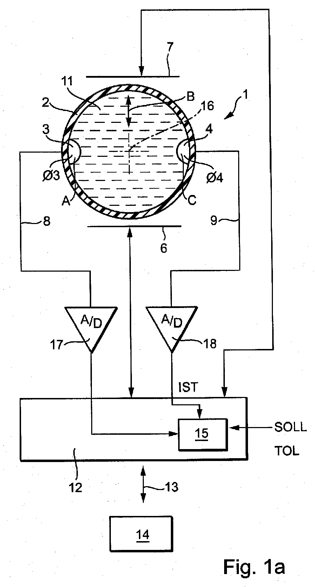

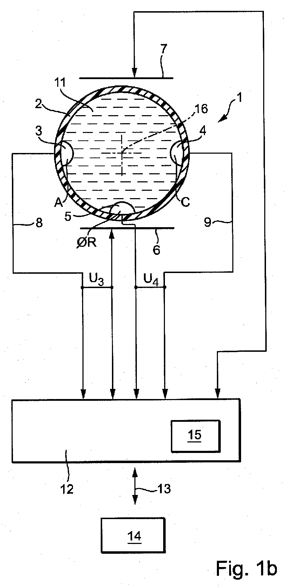

Die Figuren Fig. 1a und Fig. 1b zeigen schematische Darstellungen des erfindungsgemäßen magnetisch-induktiven Durchflussmessgeräts. Während in Fig. 1a eine Ausgestaltung ohne Referenzelektrode 5 zu sehen ist, ist in Fig. 1b eine Ausgestaltung mit Referenzelektrode 5 dargestellt. Aufgrund dieses einzigen Unterschieds wird im Nachfolgenden die gezeigte Ausgestaltung anhand der Fig. 1a erläutert.

Das Messrohr 2 eines in der Zeichnung nicht gesondert dargestellten Durchflussmessgeräts 1 wird von dem Medium 11 in Richtung der Messrohrachse 16 durchflossen. Um das magnetisch-induktive Messprinzip ausnutzen zu können, ist das Medium 11 zumindest in geringem Umfang elektrisch leitfähig. Das Messrohr 2 ist aus einem nicht-leitfähigen Material gefertigt, oder es ist zumindest an seiner Innenseite mit einem nicht-leitfähigen Material ausgekleidet.

In den beiden seitlichen Bereichen des Messrohrs 2 sind die beiden Messelektroden 3, 4 diametral angeordnet. Erfindungsgemäß sind die beiden Messelektroden 3, 4 aus unterschiedlichen Materialien - Material A und Material C - gefertigt bzw. entsprechend beschichtet. Ggf. findet sich die Referenzelektrode 5, die bevorzugt auf Masse- bzw. Erdpotential liegt, im unteren Bereich des Messrohrs 2.

Infolge des im wesentlichen senkrecht zur Strömungsrichtung des Mediums 11 ausgerichteten, alternierenden Magnetfeldes B, das von den beiden diametral angeordneten Elektromagneten 6, 7 erzeugt wird, wandern in dem Medium 11 befindliche Ladungsträger zu der jeweils entgegengesetzt gepolten Messelektrode 3, 4 ab. Die sich an den Messelektroden 3, 4 aufbauende Messspannung U ist proportional zu der über den Querschnitt des Messrohrs 2 gemittelten Strömungsgeschwindigkeit des Mediums 11, d. h. sie ist ein Maß für den Volumenstrom des Mediums 11 im Messrohr 2. Die Messspannung U wird entweder zwischen den beiden Messelektroden 3, 4 (Fig. 1b) oder zwischen jeweils einer Messelektrode 3, 4 und der Referenzelektrode 5 (Fig. 1a) abgegriffen, wobei sich im letzteren Fall bei der Differenzbildung das Referenzpotential aus der Gleichung herauskürzt. Eine Messverstärker-Anordnung für ein magnetisch-induktives Durchflussmessgerät 1 ist in der EP 0 814 324 B1 beschrieben.

Das Messrohr 2 ist über Verbindungselemente, z. B. Flansche, die in den Zeichnungen nicht gesondert dargestellt sind, mit jeweils einer als Zulauf bzw. als Ablauf ausgebildeten Rohrleitung verbunden.

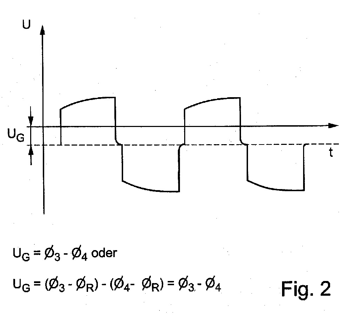

Wie aus der Fig. 3 ersichtlich, zeigt sich neben der eigentlichen für die Durchflussmessung relevanten alternierenden Messspannung U(t) an den Messelektroden 3, 4 ein durch elektrochemische und somit mediums-abhängige Störpotentiale gebildeter Gleichspannungsanteil
*U_{G}*
. Der Gleichspannungsanteil
*U_{G}*
ist der eigentlichen Messspannung U(t) überlagert. Um den Einfluss der Störpotentiale bzw. den Gleichspannungsanteil
*U_{G}*
zu erfassen, wird an den beiden Messelektroden 3, 4 jeweils die Messspannung
(t),
*U*₄
(t) zwischen einer Messelektrode 3; 4 und der Referenzelektrode 5 abgegriffen. Anschließend wird in der Regel-/Auswerteeinheit 12 die Differenz zwischen den beiden ermittelten Messspannungen
*U*₃
(t),
*U*₄
(t) gebildet (Fig. 2). Infolge der Differenzbildung
*U*₃
(t) -
*U*₄
(t) kürzt sich das Referenzpotential
Φ*_{R}*
heraus, so dass die Messspannung U(t) der Differenz der beiden Messelektroden-Potentiale
Φ₃
Φ₄
entspricht. Somit ist der eigentliche Messwert, der für die Bestimmung des Volumenstroms und der elektrochemischen bzw. physikalischen Größe herangezogen wird, unabhängig von dem Referenz-potential
Φ*_{R}*
. Bei dem Referenzpotential
Φ*_{R}*
handelt es sich üblicherweise um das Masse- bzw. Erdpotential. Alternativ wird die Spannung zwischen den beiden Messelektroden 3, 4 ermittelt (Fig. 1). Unkontrollierte Änderungen des Referenzpotentials
Φ*_{R}*
, beispielsweise als Folge des Aufbaus des Rohrleitungssystems am Einbauort - z.B. das Rohrleitungssystem besteht aus einem anderen Material als das Messrohr 2 - haben somit auf die Messgenauigkeit des Multiparameter-Durchflussmessgeräts 1 keinerlei
Auswirkungen.

In den beiden dargestellten Varianten des erfindungsgemäßen Durchflussmessgeräts 1 befinden sich die Messelektroden 3, 4 und ggf. die Referenzelektrode 5 jeweils in direktem Kontakt mit dem Medium.

Über Verbindungsleitungen 8, 9, 10 sind die Messelektroden 3, 4 und ggf. die Referenzelektrode 5 mit der Regel-/Auswerteeinheit 12 verbunden. Die Regel-/Auswerteeinheit 12 steht über die Verbindungsleitung 13 mit einer Ausgabeeinheit 14 in Verbindung. Des Weiteren erfolgt die Umpolung des Magnetfeldes B bzw. der Elektromagneten 6, 7 über die Regel-/Auswerteeinheit 12.

Der Regel-/Auswerteeinheit 12 ist eine Speichereinheit 15 zugeordnet. In der Regel-/Auswerteeinheit 12 ist ein Sollwert SOLL für zumindest eine physikalische oder elektrochemische Größe, ggf. auch für unterschiedliche Medien 11, vorgegebenen. Der Sollwert SOLL bzw. die Sollwerte SOLL der relevanten physikalischen oder elektrochemischen Größe(n) kann bzw. können auch bei Inbetriebnahme des Geräts spezifiziert werden, indem der zu diesem Zeitpunkt gemessene Istwert IST als Sollwert SOLL abgespeichert wird. Ändert sich der gemessene Istwert IST im Laufe der Zeit, so können aus der Änderung Rückschlüsse auf Änderungen am Durchflussmessgerät 1 oder im Prozess gezogen werden. Ändert sich z.B. der pH-Wert sprunghaft, so ist dies ein Indiz dafür, dass sich die Zusammensetzung des Mediums 11 bzw. das Medium 11 selbst geändert hat. Gleiches gilt hinsichtlich einer sprunghaften Änderung in der Leitfähigkeit, wohingegen eine schleichende Änderung den Schluss auf eine Verschmutzung der Messelektroden zulässt. Liegt die auftretende Abweichung außerhalb einer vorgegebenen Toleranz TOL bzw. überschreitet die tendenzielle Änderung eine vorgegebene Toleranz TOL, so wird eine entsprechende Meldung an der Anzeigeeinheit 14 ausgegeben. Alternativ kann eine Warnung über einen Bus an eine übergeordnete Leitwarte geleitet werden.

**Bezugszeichenliste**

1 Durchflussmessgerät

2 Messrohr

3 Messelektrode

4 Messelektrode

5 Referenzelektrode

6 Elektromagnet

7 Elektromagnet

8 Verbindungsleitung

9 Verbindungsleitung

10 Verbindungsleitung

11 Medium

12 Regel-/Auswerteeinheit

13 Verbindungsleitung

14 Ausgabeeinheit

15 Speichereinheit

16 Messrohrachse

17 A/D Wandler

18 A/D Wandler

## Patentansprüche

1. Magnetisch-induktives Durchflussmessgerät (1) mit einem Messrohr (2), das von einem Medium (11) im wesentlichen in Richtung der Messrohrachse (16) durchflossen wird, mit einer Magnetanordnung (6, 7), die dazu ausgebildet ist, ein das Mess-rohr (2) durchsetzendes und im wesentlichen senkrecht zur Messrohrachse (16) verlaufendes, alternierendes Magnetfeld (H) zu erzeugen und im Medium eine durchflussabhängige, alternierende Messspannung zu induzieren, mit einer ersten Messelektrode (3) und mit einer zweiten Messelektrode (4), wobei die Messelektroden (3, 4) im Messrohr (2) auf einer Verbindungslinie positioniert sind, die im wesentlichen senkrecht zur Messrohrachse (16) und zum Magnetfeld (H) ausgerichtet ist, und mit einer Auswerte-/Regeleinheit (12), die dazu ausgebildet ist, anhand der an den Mess-elektroden (3, 4) abgegriffenen, alternierenden Messspannung den Volumen- bzw. den Massedurchfluss des Mediums (11) durch das Messrohr (2) zu bestimmen,
**dadurch gekennzeichnet,**
**dass** die erste Messelektrode (3) aus einem ersten Material (A) gefertigt ist, dass die zweite Messelektrode (4) aus einem von dem ersten Material (A) unterschiedlichen zweiten Material (C) gefertigt ist, wobei eine durch elektrochemische und somit mediumsabhängige Potentiale verursachte Gleichspannung (*U_{G}*) zwischen der ersten Elektrode und der zweiten Elektrode eine mediumsspezifische Information trägt, wobei die Gleichspannung (*U_{G}*) der für die Durchflussmessung relevante, alternierenden Messpannung überlagert ist, dass die Regel-/Auswerteeinheit (12) dazu ausgebildet ist, den Gleichspannungsanteil (*U_{G}*) der an den beiden Messelektroden (3, 4) jeweils gegenüber einem Referenzpotential (Φ*_{R}*) abgegriffenen Spannung (*U*₃, *U*₄) zu ermitteln und dass die Regel-/Auswerteeinheit (12) dazu ausgebildet ist, anhand des Gleichspannungsanteils (*U_{G}*) die mediumsspezifische Information zur Verfügung zu stellen.

2. Vorrichtung nach Anspruch 1,
**dadurch gekennzeichnet,**
**dass** es sich bei dem Referenzpotential (Φ*_{R}*) um das Erdpotential handelt.

3. Magnetisch-induktives Durchflussmessgerät (1) mit einem Messrohr (2), das von einem Medium (11) im wesentlichen in Richtung der Messrohrachse (16) durchflossen wird, mit einer Magnetanordnung (6, 7), die dazu ausgebildet ist, ein das Mess-rohr (2) durchsetzendes und im wesentlichen senkrecht zur Messrohrachse (16) verlaufendes, alternierendes Magnetfeld (B) zu erzeugen und im Medium eine durchflussabhängige alternierenden Messspannung zu induzieren, mit einer ersten Messelektrode (3) und mit einer zweiten Messelektrode (4), wobei die Messelektroden (3, 4) im Messrohr (2) auf einer Verbindungslinie positioniert sind, die im wesentlichen senkrecht zur Messrohrachse (16) und zum Magnetfeld (B) ausgerichtet ist, und mit einer Auswerte-/Regeleinheit (12), die dazu ausgebildet ist, anhand der an den Messelektroden (3, 4) abgegriffenen, alternierenden Messspannung den Volumen- bzw. den Massedurchfluss des Mediums (11) durch das Messrohr (2) zu bestimmen, **dadurch gekennzeichnet, dass** die erste Messelektrode aus einem ersten Material (A) gefertigt ist, dass die zweite Messelektrode aus einem von dem ersten Material (A) unterschiedlichen zweiten Material (C) gefertigt ist, wobei eine durch elektrochemische und somit mediums-abhängige Potentiale verursachte Gleichspannung (*U_{G}*) zwischen der ersten Elektrode und der zweiten Elektrode eine mediumsspezifische Information trägt, wobei die Gleichspannung (*U_{G}*) der für die Durchflussmessung relevante, alternierenden Messpannung überlagert ist, dass die Regel-/Auswerteeinheit (12) dazu ausgebildet ist, die Gleichspannung (*U_{G}*) zwischen den beiden Messelektroden (3, 4) zu ermitteln und dass die Regel-/Auswerteeinheit (12) dazu ausgebildet ist, anhand der Gleichspannung (*U_{G}*) die mediumsspezifische Information zur Verfügung zu stellen.

4. Vorrichtung nach Anspruch 1 oder 3,
**dadurch gekennzeichnet,**
**dass** die Regel-/Auswerteeinheit (12) den Gleichspannungsanteil (*U_{G}*) bzw. die Gleichspannung (*U_{G}*) über mehrere Messperioden mittelt.

5. Vorrichtung nach Anspruch 1 oder 3,
**dadurch gekennzeichnet,**
**dass** es sich bei der mediumsspezifischen Information um eine physikalische Größe oder um eine elektrochemische Größe handelt.

6. Vorrichtung nach Anspruch 5,
**dadurch gekennzeichnet,**
**dass** es sich bei der elektrochemischen Größe um die Ionenkonzentration, um ein elektrochemisches Potential oder um den pH-Wert des Mediums handelt.

7. Vorrichtung nach Anspruch 5,
**dadurch gekennzeichnet,**
**dass** es sich bei der physikalischen Größe um die Impedanz oder die Leitfähigkeit des durch das Messrohr (2) strömenden Mediums (11) handelt.

8. Vorrichtung nach Anspruch 1 oder 3,
**dadurch gekennzeichnet,**
**dass** eine Speichereinheit (15) vorgesehen ist, in der die ermittelte mediums-spezifische Information (INFO) in Abhängigkeit von der Zeit (t) gespeichert ist und dass die Regel-/Auswerteeinheit (12) anhand einer zeitlichen Änderung der mediumsspezifischen Information (INFO) eine Meldung bereitstellt, die mit einer entsprechend vorgegebenen Änderung am Durchflussmessgerät (1) oder im Prozess korreliert ist.

9. Vorrichtung nach Anspruch 8,
**dadurch gekennzeichnet,**
**dass** in der Speichereinheit (15) mindestens ein Sollwert (SOLL) für die mediumsspezifische Information (INFO) abgespeichert ist und dass eine Anzeigeeinheit (14) vorgesehen ist, die eine Meldung ausgibt, wenn der gemessene oder ermittelte Istwert (IST) den Sollwert (SOLL) oder eine um den Sollwert (SOLL) vorgegebene Toleranz (TOL) über- oder unterschreitet.

## Claims

1. Electromagnetic flowmeter (1) with a measuring tube (2), through which a medium (11) flows essentially in the direction of the measuring tube axis (16), with a magnet arrangement (6, 7), which is designed
to generate an alternating magnetic field (H) that crosses the measuring tube (2) and runs essentially perpendicular to the measuring tube axis (16), and to induce an alternating, flow-dependent measuring voltage in the medium, with a first measuring electrode (3) and with a second measuring electrode (4), said measuring electrodes being positioned in the measuring tube (2) on a connection line, which is essentially aligned perpendicular to the measuring tube axis (16) and to the magnetic field (H), and with an evaluation/control unit (12), which is designed
to determine the volume flow or mass flow of the medium (11) through the measuring tube (2) using the alternating measuring voltage measured at the measuring electrodes (3, 4),
**characterized in that**
the first measuring electrode (3) is made from a first material (A),
the second measuring electrode (4) is made from a second material (C) that is different to the first material (A), wherein a DC voltage (*U_{G}*), generated by electrochemical potentials and therefore medium-dependent potentials, between the first electrode and the second electrode carries medium-specific information, wherein the DC voltage (*U_{G}*) is superimposed on the alternating measuring voltage that is relevant for flow measurement,
**in that** the control/evaluation unit (12) is designed
to determine the DC voltage between the two measuring electrodes (3, 4), and
**in that** the control/evaluation unit (12) is designed to provide the medium-specific information using the DC voltage (*U_{G}*).

2. Apparatus as claimed in Claim 1,
**characterized in that**
the reference potential (Φ_{R}) is the ground potential.

3. Electromagnetic flowmeter (1) with a measuring tube (2), through which a medium (11) flows essentially in the direction of the measuring tube axis (16), with a magnet arrangement (6, 7), which is designed
to generate an alternating magnetic field (B) that crosses the measuring tube (2) and runs essentially perpendicular to the measuring tube axis (16), and to induce an alternating, flow-dependent measuring voltage in the medium, with a first measuring electrode (3) and with a second measuring electrode (4), said measuring electrodes being positioned in the measuring tube (2) on a connection line, which is essentially aligned perpendicular to the measuring tube axis (16) and to the magnetic field (B), and with an evaluation/control unit (12), which is designed
to determine the volume flow or mass flow of the medium (11) through the measuring tube (2) using the alternating measuring voltage measured at the measuring electrodes (3, 4),
**characterized in that**
the first measuring electrode is made from a first material (A),
the second measuring electrode is made from a second material (C) that is different to the first material (A), wherein a DC voltage (*U_{G}*), generated by electrochemical potentials and therefore medium-dependent potentials, between the first electrode and the second electrode carries medium-specific information, wherein the DC voltage (*U_{G}*) is superimposed on the alternating measuring voltage that is relevant for flow measurement,
**in that** the control/evaluation unit (12) is designed
to determine the DC voltage component (*U_{G}*) of the voltage (U₃, U₄) measured at the two measuring electrodes (3, 4) respectively in relation to a reference potential (Φ_{R}), and
**in that** the control/evaluation unit (12) is designed to provide the medium-specific information using the DC voltage component (*U_{G}*).

4. Apparatus as claimed in Claim 1 or 3,
**characterized in that**
the control/evaluation unit (12) calculates the average DC voltage component (*U_{G}*) or the DC voltage (*U_{G}*) over several measuring periods.

5. Apparatus as claimed in Claim 1 or 3,
**characterized in that**
the medium-specific information is a physical variable or an electrochemical variable.

6. Apparatus as claimed in Claim 5,
**characterized in that**
the electrochemical variable is the ion concentration, an electrochemical potential or the pH value of the medium.

7. Apparatus as claimed in Claim 5,
**characterized in that**
the physical variable is the impedance or the conductivity of the medium (11) flowing through the measuring tube (2).

8. Apparatus as claimed in Claim 1 or 3,
**characterized in that**
a memory unit (15) is provided, in which the determined medium-specific information (INFO) as a function of the time (t) is saved, and **in that** the control/evaluation unit (12) provides a message on the basis of a change over time of the medium-specific information (INFO), said message correlating to a predefined change in the flowmeter (1) or the process.

9. Apparatus as claimed in Claim 8,
**characterized in that**
at least one target value (SOLL) for the medium-specific information (INFO) is saved in the memory unit (15) and that a display unit (14) is provided that issues a message if the measured or determined actual value (IST) exceeds or undershoots the target value (SOLL) or a tolerance (TOL) predefined around the target value (SOLL).

## Revendications

1. Débitmètre magnéto-inductif (1) avec un tube de mesure (2), qui est parcouru par un produit (11) pour l'essentiel dans la direction de l'axe de tube de mesure (16), avec un ensemble d'aimants (6, 7), qui est conçu de telle sorte à créer un champ magnétique alternatif (H) traversant le tube de mesure (2) et pour l'essentiel perpendiculaire à l'axe de tube de mesure (16), et
à induire dans le produit une tension de mesure alternative en fonction du débit, avec une première électrode de mesure (3) et avec une deuxième électrode de mesure (4), les électrodes de mesure étant positionnées, dans le tube de mesure (2), sur une ligne de jonction qui est pour l'essentiel perpendiculaire à l'axe de tube de mesure (16) et au champ magnétique (H), et avec une unité d'exploitation / de régulation (12), qui est conçue de telle sorte
à déterminer le débit volumique ou massique du produit (11) à travers le tube de mesure (2), au moyen de la tension de mesure alternative prélevée sur les électrodes de mesure (3, 4),
**caractérisé**
**en ce que** la première électrode de mesure (3) est fabriquée en un premier matériau (A),
**en ce que** la deuxième électrode de mesure (4) est fabriquée en un deuxième matériau (C) différent du premier matériau (A), une tension continue (*U_{G}*) générée entre la première électrode et la deuxième électrode par des potentiels électrochimiques et, par conséquent, dépendant du produit, portant une information spécifique au produit, la tension continue (*U_{G}*) étant superposée à la tension de mesure alternative utilisée pour la mesure de débit,
**en ce que** l'unité d'exploitation / de régulation (12) est conçue de telle sorte à déterminer la composante de tension continue (*U_{G}*) de la tension (U₃, U₄) prélevée sur les deux électrodes de mesure (3, 4) respectivement par rapport à un potentiel de référence (Φ_{R}), et
**en ce que** l'unité d'exploitation / de régulation (12) est conçue de telle sorte à mettre à disposition l'information spécifique au produit au moyen de la composante de tension continue *(U_{G}).*

2. Dispositif selon la revendication 1,
**caractérisé**
**en ce que**, concernant le potentiel de référence (Φ_{R}), il s'agit du potentiel de terre.

3. Débitmètre magnéto-inductif (1) avec un tube de mesure (2), qui est parcouru par un produit (11) pour l'essentiel dans la direction de l'axe de tube de mesure (16), avec un ensemble d'aimants (6, 7), qui est conçu de telle sorte à créer un champ magnétique alternatif (B) traversant le tube de mesure (2) et pour l'essentiel perpendiculaire à l'axe de tube de mesure (16), et
à induire dans le produit une tension de mesure alternative en fonction du débit, avec une première électrode de mesure (3) et avec une deuxième électrode de mesure (4), les électrodes de mesure étant positionnées, dans le tube de mesure (2), sur une ligne de jonction qui est pour l'essentiel perpendiculaire à l'axe de tube de mesure (16) et au champ magnétique (B), et avec une unité d'exploitation / de régulation (12), qui est conçue de telle sorte
à déterminer le débit volumique ou massique du produit (11) à travers le tube de mesure (2), au moyen de la tension de mesure alternative prélevée sur les électrodes de mesure (3, 4),
**caractérisé**
**en ce que** la première électrode de mesure (3) est fabriquée en un premier matériau (A),
**en ce que** la deuxième électrode de mesure (4) est fabriquée en un deuxième matériau (C) différent du premier matériau (A), une tension continue (*U_{G}*) générée entre la première électrode et la deuxième électrode par des potentiels électrochimiques et, par conséquent, dépendant du produit, portant une information spécifique au produit, la tension continue (*U_{G}*) étant superposée à la tension de mesure alternative utilisée pour la mesure de débit,
**en ce que** l'unité d'exploitation / de régulation (12) est conçue de telle sorte à déterminer la tension continue (*U_{G}*) entre les deux électrodes de mesure (3, 4), et
**en ce que** l'unité d'exploitation / de régulation (12) est conçue de telle sorte à mettre à disposition l'information spécifique au produit au moyen de la tension continue (*U_{G}*).

4. Dispositif selon la revendication 1 ou 3,
**caractérisé**
**en ce que** l'unité d'exploitation / de régulation (12) calcule la moyenne de la composante de tension continue (*U_{G}*) ou de la tension continue (*U_{G}*) sur plusieurs périodes de mesure.

5. Dispositif selon la revendication 1 ou 3,
**caractérisé**
**en ce que**, concernant l'information spécifique au produit, il s'agit d'une grandeur physique ou d'une grandeur électrochimique.

6. Dispositif selon la revendication 5,
**caractérisé**
**en ce que**, concernant la grandeur électrochimique, il s'agit d'une concentration d'ions, d'un potentiel électrochimique ou du pH du produit.

7. Dispositif selon la revendication 5,
**caractérisé**
**en ce que**, concernant la grandeur physique, il s'agit de l'impédance ou de la conductivité du produit s'écoulant à travers le tube de mesure (2).

8. Dispositif selon la revendication 1 ou 3,
**caractérisé**
**en ce qu'**est prévue une unité de mémoire (15), dans laquelle est mémorisée, en fonction du temps (t), l'information spécifique au produit (INFO) déterminée, et en ce que l'unité d'exploitation / de régulation (12) met à disposition, au moyen de la variation dans le temps de l'information spécifique au produit (INFO), un message qui est corrélé avec un changement prédéfini sur le débitmètre (1) ou dans le process.

9. Dispositif selon la revendication 8,
**caractérisé**
**en ce qu'**est mémorisée, dans l'unité de mémoire (15), une valeur de consigne (SOLL) pour l'information spécifique au produit (INFO) et en ce qu'est prévue une unité d'affichage (14), qui affiche un message lorsque la valeur réelle (IST) mesurée ou déterminée dépasse par excès ou par défaut la valeur de consigne (SOLL) ou une tolérance (TOL) prédéfinie autour de la valeur de consigne (SOLL).
